Europäisches Patentamt

European Patent Office

Office européen des brevets

(19)

(11) Veröffentlichungsnummer: **0 285 753 B1**

## (12) EUROPÄISCHE PATENTSCHRIFT

(45) Veröffentlichungstag der Patentschrift: **29.05.91**

(21) Anmeldenummer: **88101144.9**

(22) Anmeldetag: **27.01.88**

(51) Int. Cl.⁵: **F16L 27/04**, F16L 19/02, F16L 27/02

(54) Lösbare Rohrverbindung.

(30) Priorität: **04.04.87 DE 8705043 U**

(43) Veröffentlichungstag der Anmeldung:
**12.10.88 Patentblatt 88/41**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI LU NL SE**

(56) Entgegenhaltungen:
**DE-A- 2 731 580**
**DE-A- 2 842 206**
**DE-A- 2 847 597**
**DE-C- 858 049**

(73) Patentinhaber: **GEBO-ARMATUREN GmbH**
**Am Damm 4**
**W-5830 Schwelm(DE)**

(72) Erfinder: **Damm, Heinz**
**Bonifatiusstrasse 18**
**W-4630 Bochum 7(DE)**
Erfinder: **Rose, Heinrich**
**Elsterstrasse 24**
**W-4630 Bochum 7(DE)**

(74) Vertreter: **Finkener und Ernesti Patentanwälte**
**Heinrich-König-Strasse 119**
**W-4630 Bochum 1(DE)**

**Beschreibung**

Die Erfindung betrifft eine lösbare Rohrverbindung mit einer formstarren Muffe, in die wenigstens an einer Seite ein glattes Rohrende einschiebbar ist, in einer Ausführung gemäß dem Oberbegriff des Anspruches 1.

Lösbare Rohrverbindungen dieser Art sind in verschiedenen Ausführungen bekannt. Sie werden seit längerem für Reparaturen an Gas- und Wasserleitungen und seit einiger Zeit auch für Neuinstallationen eingesetzt. Soll beispielsweise eine undichte Rohrleitung kurzfristig und ohne großen Aufwand repariert werden, kann hierfür eine lösbare Rohrverbindung dieser Art benutzt werden, die nach dem Heraustrennen des schadhaften Stückes aus der Rohrleitung die beiden Rohrenden wieder miteinander verbindet. Bei Neuinstallationen können solche Rohrverbindungen dazu dienen, die innerhalb eines vorgefertigten Geschoßelementes vorverlegten Rohre während der späteren Montage des Bauwerkes miteinander zu verbinden.

Die bekannten lösbaren Rohrverbindungen sind überwiegend so beschaffen, daß sie nur zur Verbindung von fluchtenden Rohrenden metallischer Rohre geeignet sind, wie dies beispielsweise bei der Verschraubung der DE-A-2 842 206 der Fall ist. Diese Verschraubung enthält eine starre Rohrmuffe mit einem Außengewinde, die das zu verbindende Rohrende aufnimmt. Zur gegenseitigen Verspannung dient eine Überwurfmutter mit einer inneren Konusfläche, die beim Aufschrauben einen Klemmring mit angepaßten Konusflächen zwischen Überwurfmutter und einer konischen Innenfläche der Rohrmuffe einerseits und dem Rohrende andererseits verspannt. Aufgrund der zusammenwirkenden formgleichen Kegelflächen sind mit dieser Verschraubung nur fluchtende Rohrenden verbindbar.

Aus der DE-A-2 731 580 ist eine Rohrverbindung bekannt, die auch eine Verbindung von nicht fluchtenden Rohrenden ermöglicht, bei denen also das eingeschobene Rohrende gegenüber der Achse der starren Verbindungsmuffe eine begrenzte Winkelstellung einnehmen kann. Dabei sind die Einspannmittel so beschaffen, daß auch nach dem Verspannen der Rohrverbindung noch eine begrenzte Auslenkung des eingeschobenen Rohrendes möglich ist. Bei dieser Rohrverbindung ist ein Klemmring mit kugelförmiger Oberfläche vorgesehen, der mit dieser Oberfläche an einer inneren Konusfläche der Überwurfmutter anliegt, wobei er gegenüber der Rohrachse der Muffe in begrenztem Umfang abwinkelbar ist.

Lösbare Rohrverbindungen dieser Art werden nicht nur für Installationsrohre in Gebäuden, sondern auch für im Gelände freiverlegte Rohre wie beispielsweise Bewässerungsrohre in Gärtnereien und dergleichen verwendet. Da solche Rohrleitungen vielfach aus Kunststoff bestehen und nur an einigen Stellen unterstützt sind, so daß die Abschnitte zwischen jeweils zwei Unterstützungspunkten mehr oder weniger stark durchhängen können, ist es wichtig, daß sich die in den Rohrverbindungen befindlichen Rohrenden nicht nachträglich entsprechend dem durchhängendem Rohrverlauf schrägstellen, d.h. abwinkeln können, womit bei größeren Abwinkelungen die Gefahr verbunden ist, daß die Rohrverbindung nicht dicht bleibt. Für diese und ähnliche Anwendungsfälle werden mithin Rohrverbindungen benötigt, bei denen sichergestellt ist, daß die fluchtende Einbaulage des eingeschobenen Rohrendes auf jeden Fall erhalten bleibt. Bislang hat man diesen unterschiedlichen Bedürfnissen dadurch Rechnung getragen, daß Rohrverbindungen in zwei unterschiedlichen Bauarten angeboten wurden. Dies führt zwangsläufig zu höheren Herstellungs- und ebenso höheren Lagerhaltungskosten.

Die Aufgabe der Erfindung besteht dementsprechend darin, eine lösbare Rohrverbindung so zu gestalten, daß es möglich ist, ein und dieselbe Rohrverbindung zum einen für einen geradlinigen, starren und zum anderen für einen abgewinkelten und in bezug auf die Winkelbewegung begrenzt nachgiebigen Zusammenbau von Rohrenden einsetzen zu können.

Diese Aufgabe wird ausgehend von einer Rohrverbindung der eingangs beschriebenen Art erfindungsgemäß dadurch gelöst, daß der Klemmring im Anschluß an den Abschnitt mit der kugelförmigen Oberfläche in Richtung zur entgegengesetzten Stirnseite in einen Abschnitt mit einer konischen Oberfläche übergeht, die der inneren Konusfläche der Überwurfmutter entspricht.

Vorteilhafte Weiterbildungen dieser Rohrverbindung sind in den Ansprüchen 2 und 3 beschrieben.

Die Besonderheit der neuen Rohrverbindung ist darin zu sehen, daß Klemmring und dessen Anlagefläche in der Überwurfmutter so gestaltet sind, daß der Klemmring in zwei um 180° gegeneinander verdrehten Einbaulagen verwendbar ist. In einer ersten Einbaulage liegt der doppelseitig verwendbare Klemmring mit seiner Konusfläche formschlüssig an der entsprechend geformten Anlagefläche in der Überwurfmutter an und bewirkt damit den starren Zusammenhalt von Rohrende und Verbindungsmuffe in der fluchtenden Einbaulage des Rohrendes.

Anders sieht es aus, wenn der Klemmring eine um 180° gedrehte Einbaulage einnimmt, in der seine kugelförmige Oberfläche an der konusförmigen Innenfläche der Überwurfmutter anliegt. In dieser Stellung sind begrenzte Winkelbewegungen des Klemmringes und damit des eingeschobenen Rohrendes gegenüber der Überwurfmutter möglich. In beiden Fällen dringt der Klemmring teilweise in einen Ringraum ein, der zwischen dem Halsteil der Verbindungsmuffe und der Wandung des eingeschobenen Rohrendes liegt. Er drückt hier mit seiner inneren Stirnfläche über einen metallischen Druckring gegen einen elastischen Dichtring. Der von der Überwurfmutter erzeugte Axialschub bewirkt ein Anpressen des elastischen Dichtringes gegen die vorerwähnten Begrenzungswände des Ringraumes. Auf diese Weise ist eine zuverlässige Abdichtung erzielbar, ohne daß die Gefahr einer übermäßigen Verformung des elastischen Dichtringes besteht.

Dank dieser Ausgestaltung von Klemmring und Anlagefläche in der Überwurfmutter ist es nicht mehr notwendig, Rohrverbindungen dieser Art in zwei unterschiedlichen Bauarten herzustellen und bereitzuhalten. Je nach den Anforderungen am Verwendungsort kann der Klemmring vor dem Einsatz der Rohrverbindung in der einen oder anderen Einbaulage eingelegt werden.

Ein Ausführungsbeispiel einer lösbaren Rohrverbindung gemäß der Erfindung ist in der Zeichnung dargestellt und wird nachfolgend näher erläutert. Es zeigen:

Fig. 1 eine teilweise axial geschnittene Seitenansicht der Rohrverbindung mit einem fluchtend eingesetzten Rohrende und

Fig. 2 eine teilweise axial geschnittene Seitenansicht der Rohrverbindung mit einem abgewinkelt eingesetzten Rohrende.

Bei der in der Zeichnung dargestellten Rohrverbindung ist die formstarre Muffe (1) so ausgebildet, daß nur an einem ihrer Enden ein glattes Rohrende (2) einschiebbar ist. Das andere Ende ist als Rohranschlußstutzen (3) mit Außengewinde gestaltet. Ebensogut kann die formstarre Muffe zwei spiegelbildlich zueinander ausgebildete Enden aufweisen. Sie kann dann für das Verbinden von zwei glatten Rohrenden eingesetzt werden.

Die formstarre Muffe (1) hat am Einschubende einen zylindrischen Halsteil (4), der mit einem Außengewinde (5) versehen ist. Dieser Halsteil geht an der Innenwand in eine wulstartige Einschnürung (6) über, der das eingeschobene Rohrende (2) mit einem kleinen Spiel umschließt. An die wulstartige Einschnürung (6) schließt sich ein im Durchmesser größerer hohlzylindrischer Mittelabschnitt (7) an.

Zwischen dem Halsteil (4) und dem eingeschobenen Rohrende (2) befindet sich ein Ringraum (8), der die Funktion einer Dichtkammer hat. In dem Ringraum (8) liegen nacheinander in Richtung auf das freie Stirnende ein elastischer Dichtring (9) aus Gummi oder dergleichen und ein metallischer Druckring (10), wobei der letztgenannte an seiner Außenwandung im wesentlichen spielfrei an der Innenwandung des Halsteils (4) anliegt, dagegen an seiner inneren Zylinderwandung das eingeschobene Rohrende (2) mit geringem Spiel umgibt.

Auf dem Außengewinde (5) des Halsteils (4) ist eine Überwurfmutter (11) mit Innenkonus gelagert, die außen zweckmäßigerweise nach Art einer üblichen Mutter mit einem Sechskant-Profil oder einem anderen Profil versehen ist. Die in der Kappe der Überwurfmutter (11) befindliche Durchgangsöffnung (12) ist im Querschnitt größer bemessen als der Querschnitt des eingeschobenen Rohrendes, so daß ein Ringspalt zwischen den beiden Teilen freibleibt. Die innere Mantelfläche (13) der Durchgangsöffnung (12) ist entsprechend einem Kegelstumpf ausgebildet, dessen Querschnitt in Richtung zum freien Ende der Überwurfmutter (11) abnimmt.

Die Übertragung einer axial gerichteten Schubkraft von der Überwurfmutter (11) auf den metallischen Druckring (10) wird mit einem metallischem Klemmring (14) bewirkt, der einen axial durchgehenden (nicht dargestellten) Schlitz aufweist. Der Klemmring (14) enthält etwa von seiner quer zur Ringachse stehenden Mittelebene aus in Richtung auf eine Stirnseite eine konische Mantelfläche (15) und in Richtung auf die andere Stirnseite eine kugelförmige Mantelfläche (16).

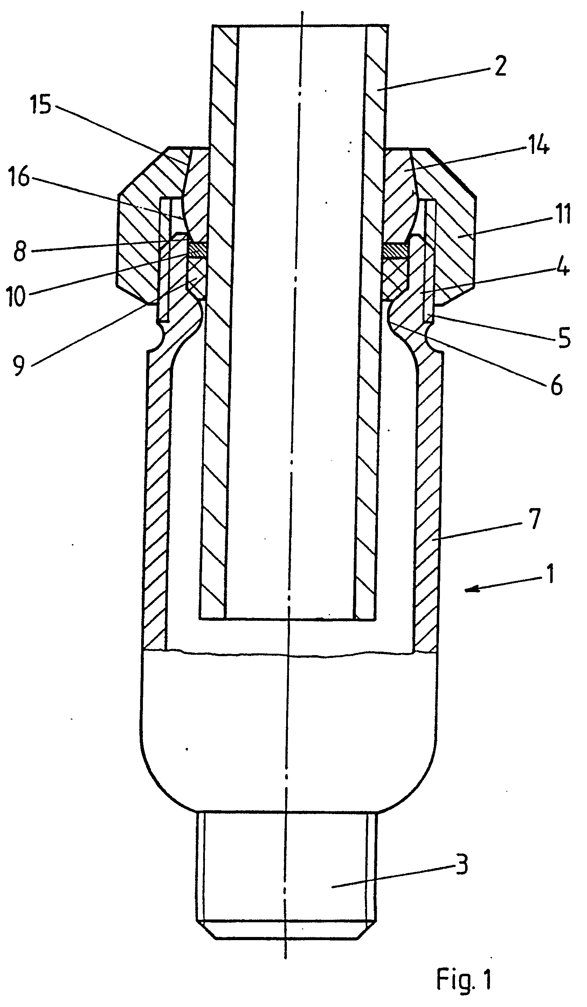

In Fig. 1 liegt der Klemmring (14) mit seiner konischen Mantelfläche (15) an der ebenfalls konischen Innenfläche (13) der Überwurfmutter (11) an. Der Klemmring (14) wird in dieser Stellung formschlüssig in der Überwurfmutter (11) gehalten. Die beiden Teile sind dabei formstarr miteinander verbunden. Dies bedeutet, daß auch das vom Klemmring (14) umschlossene Rohrende (2) mit der Überwurfmutter (11) und damit mit der Muffe (1) in starrer Verbindung steht. Abwinkelungen des eingeschobenen Rohrendes sind bei dieser Einbaulage des Klemmringes (14) nicht möglich.

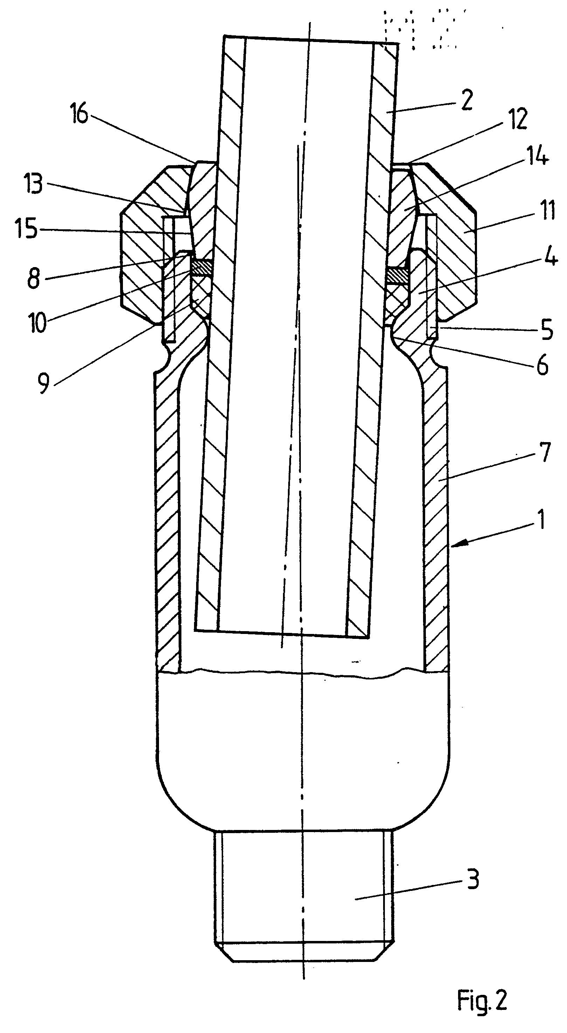

In Fig. 2 nimmt der Klemmring (14) die um 180° gedrehte Einbaulage ein, in der die kugelförmige Oberfläche (16) mit der konischen Innenfläche (13) der Überwurfmutter (11) in Druckberührung steht. In dieser Einbaulage ist jedoch keine durchgehende flächige Anlage gegeben, sondern die Druckberührung erfolgt im wesentlichen auf einer Umfangslinie der kugelförmigen Oberfläche (16). Der Druckring (14) ist in der Überwurfmutter (11) nach Art eines Kugelgelenks begrenzt schwenkbar gehalten. In dieser Einbaulage des Klemmringes (14) sind somit leichte Abwinkelungen des eingeschobenen Rohrendes gegenüber der Zylinderachse der Muffe (1) möglich, wie es in Fig. 2 dargesetllt ist.

In beiden Einbaulagen wird mit dem Anziehen der Überwurfmutter (11) zunächst der Klemmring (14) im Sinne einer Umfangsverkleinerung zusammengedrückt und dabei gegen die Wandung des eingeschobenen Rohrendes (2) gepreßt und zugleich axial in Richtung auf den metallischen Druckring (10) bewegt, der seinerseits eine axial gerichtete Schubkraft auf den elastischen Dichtring (9) überträgt. Diese Schubkraft bewirkt ein radiales Anpressen des elastischen Dichtringes (9) gegen die Wandungen der Dichtkammer und gegen die Oberfläche der wulstartigen Einschnürung (6). Dies bewirkt eine zuverlässige Abdichtung des eingeschobenen Rohrendes (2) gegenüber der Muffe (1). Da der elastische Dichtring (9) hierbei allseitig umschlossen ist, besteht nicht die Gefahr einer unzulässigen Deformierung. Die hierbei erzielbare Dichtwirkung bleibt auch bei einer eventuellen nachträglichen Veränderung der Winkellage des eingeschobenen Rohrendes (2) erhalten, weil sich der elastische Dichtring (9) eventuellen Veränderungen der Winkellage des eingeschobenen Rohrendes (2) selbsttätig anpaßt.

**Ansprüche**

1. Lösbare Rohrverbindung mit einer formstarren Muffe, in die wenigstens an einer Seite ein glattes Rohrende einschiebbar ist, bei der die Muffe einen endseitigen Halsteil und daran anschließend einen im Querschnitt größeren Mittelabschnitt aufweist, bei der der Halsteil auf einem Außengewinde eine Überwurfmutter trägt, die mit einer inneren Konusfläche an einem axial geschlitzten metallischen Klemmring anliegt, der das Rohrende umschließt und der einerseits mit einer kugelförmigen Oberfläche an der inneren Konusfläche der Überwurfmutter und andererseits an seiner inneren Stirnseite an einem metallischen Druckring anliegt, dem ein elastischer Dichtring aus Gummi oder dergleichen vorgelagert ist, der gegen den Halsteil verspannbar ist, dadurch gekennzeichnet, daß der Klemmring (14) im Anschluß an den Abschnitt mit der kugelförmigen Oberfläche (16) in Richtung zur entgegengesetzten Stirnseite in einen Abschnitt mit einer konischen Oberfläche (15) übergeht, die der inneren Konusfläche (13) der Überwurfmutter (11) entspricht.

2. Rohrverbindung nach Anspruch 1, dadurch gekennzeichnet, daß der Halsteil (4) der Muffe (1) mit einem endseitigen Abschnitt das Rohrende (2) unter Freilassung eines Ringraumes (Dichtkammer) (8) umschließt, der an seinem inneren Ende von einer das Rohrende (2) mit Spiel umgebenden wulstartigen Einschnürung (6) abgeschlossen ist, wobei im Ringraum (8) der elastische Dichtring (9) und der Druckring (10) einliegen und daß der elastische Dichtring (9) an seiner der Einschnürung (6) zugewandten Stirnseite eine kegelige oder kugelige Oberfläche aufweist.

3. Rohrverbindung nach Anspruch 1 oder 2, dadurch gekennzeichnet, daß der Klemmring (14) in der Spannstellung teilweise in den Ringraum (8) eindringt.

**Claims**

1. Disconnectable pipe connection with a socket whose shape is rigid and into which a smooth pipe end can be inserted at least on one side, in which (connection) the socket has a neck part at the end, and connecting to it, a central section which is larger in cross-section, in which the neck part carries on an outer thread a sleeve which butts with an inner conical surface against an axially slotted metallic clamping ring which surrounds the pipe end and which, on the one hand, butts with a spherical surface against the inner conical surface of the sleeve, and on the other hand butts by its inner front face against a metallic thrust collar, in front of which there is mounted an elastic sealing ring of rubber or the like, which can be clamped against the neck part, characterized in that the clamping ring (14) at the connection to the section with the spherical surface (16) turns towards the opposite front face, into a section with a conical surface (15) which corresponds to the inner conical surface (13) of the thrust collar (11).

2. Pipe connection as claimed in Claim 1, characterized in that the neck part (4) of the socket (1) surrounds the pipe end (2) with an end-sided section, leaving free an annular space (sealing chamber) (8) which at its inner end is sealed by a reduction (6) which is collar-shaped and surrounds the pipe end (2) with play, the elastic sealing ring (9) and the thrust collar (10) being enclosed in the annular space (8), and that the elastic sealing ring (9) has a conical or spherical surface on its front face which is turned towards the reduction (6).

3. Pipe connection as claimed in Claim 1 or Claim 2, characterized in that the clamping ring (14) partly enters the annular space (8) in the clamped position.

**Revendications**

1. Raccord de tuyaux détachable ou amovible comportant un manchon indéformable dans lequel au moins sur un côté on peut introduire une extrémité de tuyau lisse, le manchon comportant un collet sur un côté d'extrémité et, raccordé à celui-ci, un tronçon médian de section transversale supérieure, dans lequel le collet porte un écrou-raccord sur un filetage extérieur, lequel écrou-raccord repose par sa face conique intérieure sur un anneau de serrage métallique fendu axialement, lequel anneau de serrage enserre l'extrémité de tuyau et d'une part s'appuie par une surface sphérique sur la face conique intérieure de l'écrou-raccord et d'autre part, par son côté frontal intérieur sur un anneau de compression métallique en amont duquel est monté un joint d'étanchéité élastique en caoutchouc ou en une matière similaire pouvant être bloqué contre le collet, raccord de tuyaux détachable caractérisé en ce que l'anneau de serrage (14) en liaison avec un tronçon sur la surface sphérique (15) en direction du côté frontal opposé forme un tronçon de surface conique (15) qui correspond à la face conique intérieure (13) de l'écrou-raccord (11).

2. Raccord pour tuyaux selon la revendication (1), caractérisé en ce que le collet (4) du manchon (1) enserre par un tronçon d'extrémité l'extrémité de tuyau (2) tout en laissant un espace annulaire libre (chambre d'étanchéité) (8), espace d'étanchéité qui est obturé sur son extrémité intérieure par un rétrécissement en forme de bourrelet (6) entourant l'extrémité de tuyaux (2) avec un jeu, le joint d'étanchéité élastique (9) et l'anneau de compression (10) étant disposés dans l'espace annulaire (8) et en ce que le joint d'étanchéité élastique (9) présente sur son côté frontal dirigé vers le rétrécissement en forme de bourrelet (6) une surface conique ou sphérique.

3. Raccord pour tuyaux selon la revendication 1 ou 2, caractérisé en ce que dans la position de blocage l'anneau de serrage (14) pénètre partiellement dans l'espace annulaire (8).

Fig. 1

Fig. 2